(19) Europäisches Patentamt
European Patent Office
Office européen des brevets

(11) EP 1 605 599 A2

(12) EUROPEAN PATENT APPLICATION

(43) Date of publication:
14.12.2005 Bulletin 2005/50

(51) Int Cl.7: H04B 1/69

(21) Application number: 05253533.3

(22) Date of filing: 09.06.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 09.06.2004 KR 2004042291

(71) Applicant: SAMSUNG ELECTRONICS CO., LTD.
Suwon-si, Gyeonggi-do (KR)

(72) Inventors:
- Choi, Yun-hwa
Seoul (KR)
- Kim, Jae-hyon
Yeongtong-gu Suwon-si, Gyeonggi-do (KR)

(74) Representative: Robinson, Ian Michael et al
Appleyard Lees,
15 Clare Road
Halifax HX1 2HY (GB)

# (54) Method for ultra wideband communication, and ultra wideband transmitter and receiver

(57) A method and apparatus for ultra wideband (UWB) communication are provided. The method includes generating a UWB signal having different types of data segments composed of at least one bit, the data segments being mapped to different central frequencies according to the types of the data segments, transmitting the UWB signal to a device through a wireless medium, receiving, by the device, the UWB signal transmitted through the wireless medium, and determining a data segment mapped to a central frequency of the received UWB signal.

FIG. 1

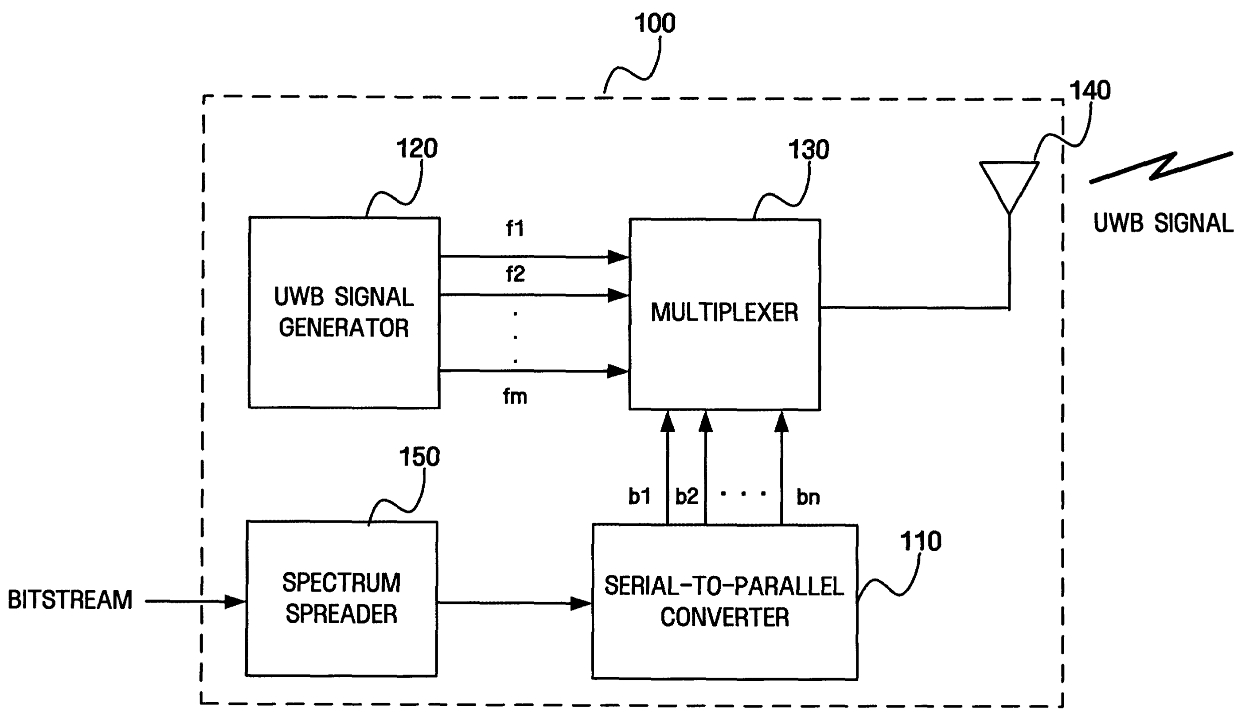


EP 1 605 599 A2

## Description

The present invention relates to a method and apparatus for ultra wideband (UWB) communication, and more particularly, to a method and apparatus for UWB communication using band shift keying.

Recently, rapid advances in wireless communication technology and the proliferation of wireless devices have led to a tremendous change in the way people live. In particular, ultra wideband (UWB) communication, which coexists with conventional wireless communication services without requiring additional frequencies and can perform high-speed wireless communication, has been recently researched.

UWB technology was first used for military purposes in the 1950s in the United States. In 1994 UWB technology was released to the public and since then it has been researched and developed by venture companies and laboratories for commercial use. On February 14, 2002, the American Federal Communications Commission (FCC) permitted the commercial use of UWB technology. At present, an Institute of Electrical and Electronics Engineers (IEEE) 802.15 Working Group (WG) is working on standardizing UWB technology. The FCC defines UWB as wireless transmission technology occupying a bandwidth greater than 20% of a central frequency, or a bandwidth greater than 500 MHz. Here, bandwidth is determined based on a -10 dB point, unlike in other communication where a bandwidth is determined based on the-3 dB point. In conventional narrowband communication data is transmitted using a carrier wave containing a baseband signal, but in UWB communication data is transmitted using very short baseband pulses of several nanoseconds without using a carrier wave. Accordingly, a UWB pulse of several nanoseconds in the time domain has a wideband of up to several gigahertz in the frequency spectrum. As such, UWB technology uses a remarkably wider frequency band than conventional narrowband wireless communication technology.

Such UWB technology has various characteristics different from conventional narrowband communication technology. In UWB technology, since signals are transmitted using pulses, frequency bandwidth is increased while power density is decreased. In other words, communication is possible even below the noise band.

How the UWB technology allows ultrahigh-speed transmission can be explained using Shannon's capacity. According to Shannon limit, a maximum data rate at which data can be transmitted without errors in both of wired and wireless communication systems can define a unique communication channel capacity C for each of provided physical communication channels. In particular, since the available frequency bandwidth B is limited, the maximum channel capacity C of the channel having errors due to noise is expressed by Equation 1:

$$C = B \log_2(1 + \frac{S}{N}) \qquad (1)$$

where B is channel bandwidth, S is signal power, and N is noise power.

It can be inferred from Equation 1 that C linearly increases with respect to B and logarithmically increases due to S/N. In other words, when a bandwidth increases, a maximum channel capacity also increases proportionately. Since UWB technology uses a short pulse, i.e., a wavelet, to transmit and receive information, a UWB signal has a wide bandwidth of several GHz. In other words, data can be transmitted at an ultrahigh speed in UWB communication. In addition, since UWB technology uses a wide bandwidth, communication can be performed with low power. Moreover, UWB technology allows multi-access and suppresses multipath interference.

UWB technology can be applied to various fields, and particularly to high-speed local communication in an area within several meters to several tens of meters. Methods of modulating a UWB signal for the high-speed local communication include pulse position modulation (PPM) using the change in a temporal position of a UWB wavelet, pulse amplitude modulation (PAM) using the magnitude of a pulse, phase shift keying (PSK) such as binary PSK (BPSK) or quadrature PSK (QPSK), and orthogonal frequency division modulation (OFDM). A variety of UWB modulation methods have been suggested, and further study on modulation methods is required.

According to the present invention there is provided an apparatus and method as set forth in the appended claims. Preferred features of the invention will be apparent from the dependent claims, and the description which follows.

The present invention provides a method for ultra wideband (UWB) communication using a new modulation method, and a UWB transmitter and receiver therefor.

According to an aspect of the present invention, there is provided a method for UWB communication, including generating a UWB signal having different types of data segments composed of at least one bit, the data segments being mapped to different central frequencies according to the types of the data segments; transmitting the UWB signal to a device through a wireless medium; receiving, by the device, the UWB signal transmitted through the wireless medium; and determining a data segment mapped to a central frequency of the received UWB signal.

According to another aspect of the present invention, there is provided a method for ultra wideband (UWB) communication, including determining one central frequency among different central frequencies according to a type of a frequency segment included in a data segment composed of a plurality of bits, performing predetermined modulation according to a type of a modulation segment included in the data segment to generate a UWB signal having he determined central frequency, transmitting the UWB signal to a device through a wireless medium, receiving, by the device, the received UWB signal transmitted through the wireless medium, and determining a frequency segment according to a central frequency of the received UWB signal and determining a modulation segment by demodulating the received UWB signal using predetermined demodulation.

According to still another aspect of the present invention, there is provided an ultra wideband (UWB) transmitter including a UWB signal generator generating UWB signals having different central frequencies, a selector selecting one UWB signal mapped to a data segment composed of at least one bit among the generated UWB signals, and a transmitter outputting the selected UWB signal to a wireless medium.

According to yet another aspect of the present invention, there is provided an ultra wideband (UWB) receiver including a receiver receiving a UWB signal transmitted through a wireless medium, a correlator providing correlations between the received UWB signal and a plurality of central frequencies, and a determiner determining a data segment mapped to a central frequency having a highest correlation.

The above and other features and advantages of the present invention will become more apparent by describing in detail preferred embodiments thereof with reference to the attached drawings in which:

Figure 1 is a block diagram of an ultra wideband (UWB) transmitter according to an exemplary embodiment of the present invention;

Figure 2 is a block diagram of a UWB signal generator according to an exemplary embodiment of the present invention;

Figure 3 is a block diagram of a UWB signal generator according to another exemplary embodiment of the present invention;

Figures 4A and 4B are graphs showing a frequency band in UWB communication and waveforms of a UWB signal in an exemplary embodiment of the present invention;

Figure 5 illustrates waveforms of a modulated UWB signal in an exemplary embodiment of the present invention;

Figure 6 illustrates waveforms of a modulated UWB signal in another exemplary embodiment of the present invention;

Figure 7 illustrates waveforms of a modulated UWB signal in still another exemplary embodiment of the present invention;

Figure 8 illustrates waveforms of a modulated UWB signal in yet another exemplary embodiment of the present invention;

Figure 9 is a block diagram of a UWB receiver according to an exemplary embodiment of the present invention;

Figures 10A and 10B are graphs showing an input UWB signal and a waveform of a band-pass filtered UWB signal in the UWB receiver shown in Figure 9;

Figure 11 is a block diagram of a UWB receiver according to another exemplary embodiment of the present invention;

Figures 12A and 12B are graphs showing an input UWB signal and a waveform of the UWB signal after passing a mixer in the UWB receiver shown in Figure 11;

Figures 13A and 13B are graphs illustrating the relationship between a frequency band and a central frequency in an exemplary embodiment of the present invention;

Figures 14A and 14B are graphs illustrating waveforms of a UWB signal having a narrower spacing between central frequencies than a frequency bandwidth in an exemplary embodiment of the present invention; and

Figures 15A and 15B illustrate the structures of a bitstream according to different exemplary embodiments of the present invention.

The present invention will now be described more fully with reference to the accompanying drawings, in which exemplary embodiments of the invention are shown.

Figure 1 is a block diagram of an ultra wideband (UWB) transmitter according to an embodiment of the present invention.

The UWB transmitter 100 divides a bitstream into a plurality of data segments comprised of a predetermined number of bits, and it selectively outputs UWB signals having different frequencies according to the type of data segment. For these operations, the UWB transmitter 100 includes a serial-to-parallel converter 110 for converting a serial bitstream into a parallel bitstream, a UWB signal generator 120 for generating UWB signals having different central frequencies, and a multiplexer 130 for receiving the parallel bitstream, i.e., data segments, and selecting a UWB signal to map the data segments to. The multiplexer 130 functions as a switch and selects one UWB signal among many having different central frequencies. A radio frequency (RF) output unit 140 transmits the UWB signal selected by the multiplexer 130 to another device in a wireless manner. The UWB signal generator 120 will be described later.

To reduce errors that may occur in a wireless channel and increase the randomness of a transferred UWB signal, a bitstream input to the serial-to-parallel converter 110 may be a spectrum-spread bitstream. In this case, the UWB transmitter 100 further includes a spectrum spreader 150 for spreading the spectrum of the bitstream. The spectrum spreader 150 may spread the spectrum of the bitstream using a direct sequence spread spectrum (DSSS) method, or it may output a random code for each bit segment having a predetermined number of bits. In either case, it is preferable that an output bitstream has the form of pseudo-random noise. When the bitstream is spread using the DSSS method, the spectrum spreader 150 uses code division multiple access (CDMA). When the random code is output for each bit segment the spectrum spreader 150 receives a bit segment comprised of "n" bits and outputs a pseudo-random noise code, among pseudo-random noise codes comprised of "m" bits (m>n), mapped to the received bit segment. Here, pseudo-random noise codes are divided into 2n groups.

The following description concerns generating a UWB signal having two different central frequencies.

Figure 2 is a block diagram of the UWB signal generator according to an embodiment of the present invention.

The UWB signal generator 120 includes a pulse generator 210 for generating a pulse having a predetermined bandwidth, a first oscillator 231 and a second oscillator 232 for respectively generating carriers having different central frequencies, and a first mixer 221 and a second mixer 222 that mix the pulse generated by the pulse generator 210 with the carriers generated by the first oscillator 231 and the second oscillator 232 to generate two UWB signals having different central frequencies.

The bandwidth of a pulse generated by the pulse generator 210 is the same as that of a UWB signal. The bandwidth of the UWB signal must satisfy the Federal Communications Commission (FCC) provision. Therefore, the bandwidth of a UWB signal must exceed 500 MHz or be at least 20% of a central frequency. To satisfy this provision, the pulse generator 210 must generate a very short pulse having a bandwidth over 500 MHz, or a pulse having a bandwidth of at least 20% of a central frequency f1 or f2 of the carrier generated by the first or second oscillator 231 or 232.

Meanwhile, to improve the frequency characteristics of UWB signals output from the first and second mixers 221 and 222, the UWB signal generator 120 may further include a first filter 241 and a second filter 242 that respectively filter the UWB signals. Root raised cosine (RRC) filtering or Gaussian filtering may be used as a filtering method. A UWB signal processed by the first filter 241 has a central frequency f1, and a UWB signal processed by the second filter 242 has a central frequency f2.

Figure 3 is a block diagram of the UWB signal generator according to another embodiment of the present invention.

The UWB signal generator 120 includes a first pulse generator 311 and a second pulse generator 312 each generating a pulse having a predetermined bandwidth, a first oscillator 331 and a second oscillator 332 for generating carriers having different central frequencies, and first through fourth mixers 321, 322, 323, and 324 which mix the pulses generated by the first and second pulse generators 311 and 312 with the carriers generated by the first and second oscillators 331 and 332 to respectively generate four UWB signals having two central frequencies f1 and f2.

According to the FCC provision the bandwidth of the pulses generated by the first and second pulse generators 311 and 312 must exceed 500 MHz, or be at least 20% of the central frequencies f1 or f2. The shape of a first pulse generated by the first pulse generator 311 and the shape of a second pulse generated by the second pulse generator 312 are determined by a UWB signal modulation method. For example, the first and second pulses may have opposite phases. Biphase modulation (BPM) can be used as the UWB signal modulation method when the first and second pulses have opposite phases. Alternatively, the first and second pulses may have different amplitudes. In this case, pulse amplitude modulation (PAM) can be used as the UWB signal modulation method. As another alternative, the first and second pulses may have a temporal difference therebetween. In this case, pulse position modulation (PPM) can be used as the UWB signal modulation method.

The first pulse and the second pulse are mixed with the carrier having the central frequency f1 by the first mixer 321 and the second mixer 322, respectively, and are mixed with the carrier having the central frequency f2 by the third mixer 323 and the fourth mixer 324, respectively.

Like the UWB signal generator 120 shown in FIG. 2, the UWB signal generator 120 shown in FIG. 3 may further include first through fourth filters 341, 342, 343, and 344 to filter four UWB signals, respectively. RRC filtering or Gaussian filtering may be used as a filtering method.

Alternatively, the UWB signal generator 120 may be implemented to have a single pulse generator instead of having the first and second pulse generators 311 and 312. When BPM is used, the UWB signal generator 120 includes a phase inverter. Here, the UWB signal generator 120 can generate a pulse having an inverted phase using the phase inverter. When PAM is used, the UWB signal generator 120 includes an amplifier. In this case, the UWB signal generator 120 can generate a pulse having an amplified amplitude using the amplifier. When PPM is used, the UWB signal generator 120 includes a time delay unit to generate a pulse having a phase with a different temporal position. The UWB signal generator 120 may also have a structure for generating pulses resulting from a combination of the above-described modulation methods.

Figures 4A and 4B are graphs showing a frequency band in UWB communication and waveforms of a UWB signal in an embodiment of the present invention.

Figure 4A illustrates frequency bands of two respective UWB signals having different central frequencies, which are generated by the UWB signal generator 120 shown in Figures 2 and 3. A spacing is present between a low frequency band and a high frequency band to reduce interference with a 5 GHz wireless local area network (LAN) complying with IEEE 802.11a. Figure 4B illustrates waveforms of the two respective UWB signals on a time axis. Referring to Figure 4B, the upper graph shows a waveform of a UWB signal in the low frequency band, and the lower graph shows a waveform of a UWB signal in the high frequency band. The widths of the two waveforms are almost similar to each other on the time axis. Each of these widths corresponds to a width of a pulse generated by a pulse generator on the time axis. The width of a waveform shown in Figure 4B is inversely proportional to the bandwidth of the waveform shown in Figure 4A. In other words, when the bandwidth of the waveform shown in Figure 4A becomes broader, the width of the waveform shown in Figure 4B becomes narrower. Conversely, when the bandwidth of the waveform shown in Figure 4A becomes narrower, the width of the waveform shown in Figure 4B becomes broader. Hereinafter, in Figures 5 through 12B, two bandwidths are present.

Figure 5 illustrates waveforms of a modulated UWB signal in an embodiment of the present invention.

Unlike in conventional communication methods, a band is used for transmission of information. When two bands are used for communication, a symbol S1 is mapped to a low frequency band and a symbol S2 is mapped to a high frequency band. For example, "0" may be allocated to the symbol S1 and "1" may be allocated to the symbol S2. Alternatively, "1" may be allocated to the symbol S1 and "0" may be allocated to the symbol S2. A modulation method in which data is transmitted according to a band shift is referred to as band shift keying (BSK). Hereinafter, combinations of BSK and other modulation methods will be described with reference to Figures 6 through 8.

Figure 6 illustrates waveforms of a UWB signal in a modulation method in which BSK using two bands and BPM are combined.

When BSK using two bands is combined with BPM, four different waveforms can be obtained. Four symbols S1, S2, S3, and S4 are mapped to the four different waveforms, respectively. For example, "00" and "01" are respectively allocated to the symbols S1 and S2 which are mapped to two waveforms having different phases in a low frequency band of the UWB signal while "10" and "11" are respectively allocated to the symbols S3 and S4 mapped to two waveforms having different phases in a high frequency band of the UWB signal.

Figure 7 illustrates waveforms of a UWB signal in a modulation method in which BSK using two bands and PAM are combined.

When BSK using two bands is combined with PAM, four different waveforms can be obtained. Four symbols S1, S2, S3, and S4 are mapped to the four different waveforms, respectively. For example, "00" and "01" are respectively allocated to the symbols S1 and S2 that are mapped to two waveforms having small amplitudes in different bands of the UWB signal while "10" and "11" are respectively allocated to the symbols S3 and S4 that are mapped to two waveforms having large amplitudes in different bands of the UWB signal.

Figure 8 illustrates waveforms of a UWB signal in a modulation method in which BSK using two bands, BPM, and PAM are combined.

When BSK using two bands is combined with BPM and PAM, eight different waveforms can be obtained. Eight symbols S1, S2, S3, S4, S5, S6, S7, and S8 are mapped to the eight different waveforms, respectively. For example, a first bit value is allocated according to the magnitude of amplitude of each UWB signal waveform, a second bit value is allocated according to a band of the UWB signal waveform, and a third bit value is allocated according to a phase thereof. "000" and "001" respectively refer to the symbols S1 and S2 that are mapped to two UWB signal waveforms having small amplitudes in a low frequency band. "010" and "011" respectively refer to the symbols S3 and S4 that are mapped to two UWB signal waveforms having small amplitudes in a high frequency band. "100" and "101" respectively refer to the symbols S5 and S6 that are mapped to two UWB signal waveforms having large amplitudes in the low frequency band. "110" and "111" respectively refer to the symbols S7 and S8 that are mapped to two UWB signal waveforms having large amplitudes in the high frequency band.

The above-described modulation methods are just examples. BSK may be combined with PPM, or it may be combined with PPM and other modulation methods.

Figure 9 is a block diagram of a UWB receiver according to an embodiment of the present invention. The UWB receiver 900 demodulates a UWB signal using a non-coherent scheme; here, a modulation method like BPM, which uses phase information, cannot be used.

The UWB receiver 900 includes an RF signal receiver 910 for receiving a UWB signal r(t), a correlator 920 for providing correlations between the received UWB signal and a plurality of central frequencies, and a determiner 930 comparing the correlations, determining the most correlation, and determining data segment mapped to central frequency having the most correlation among the plurality of central frequencies.

To receive a spread spectrum UWB signal from a UWB transmitter, the UWB receiver 900 further includes a spectrum despreader 940 for despreading a bitstream comprised of data segments.

The correlator 920 provides correlations between the received UWB signal and two distinct central frequencies f1 and f2. For this operation, the correlator 920 includes a first band-pass filter 921 for band-pass filtering the received UWB signal with the central frequency f1, a second band-pass filter 922 for band-pass filtering the received UWB signal with the central frequency f2, a first energy detector 926 for detecting the energy of a first band-pass filtered UWB signal, and a second energy detector 927 for detecting the energy of a second band-pass filtered UWB signal.

The determiner 930 compares the energy detected by the first energy detector 926 with the energy detected by the second energy detector 927 and determines the central frequency of the received UWB signal by choosing the UWB signal having greater energy. The determiner 930 outputs a data segment mapped to the central frequency of the received UWB signal.

For example, the UWB receiver 900 may receive a UWB signal that has been modulated according to BSK using two bands. Here, it is assumed that the UWB signal has the central frequency f1. The RF signal receiver 910 receives the UWB signal and transmits it to the first band-pass filter 921 and the second band-pass filter 922. The first band-pass filtered UWB signal by the first band-pass filter 921 and the second band-pass filtered UWB signal by the second band-pass filter 922 are transmitted to the first energy detector 926 and the second energy detector 927, respectively. The first energy detector 926 detects the energy (i.e., the strength) of the first band-pass filtered UWB signal and the second energy detector 927 detects the energy of the second band-pass filtered UWB signal. The energy of a band-pass filtered UWB signal may be obtained by integrating the power of the band-pass filtered UWB signal over time period corresponding to a width of the UWB signal on a time axis. When the time period is large, the effect of external noise increases. Conversely, when the time period is excessively short, the band-pass filtered UWB signal may not be detected. Since the received UWB signal has the central frequency f1, the strength of the first band-pass filtered UWB signal is greater than that of the second band-pass filtered UWB signal. Accordingly, the energy detected by the first energy detector 926 is greater than that detected by the second energy detector 927. As a result, the determiner 930 outputs a data segment mapped to the frequency f1. For example, when "0" is mapped to the frequency f1 and "1" is mapped to the frequency f2, the determiner 930 outputs "0". When a UWB signal is not received, the energy detected by the first and second energy detectors 926 and 927 is less than a first reference value, and therefore, the determiner 930 determines that no data has been received.

Alternatively, the UWB receiver 900 may receive a UWB signal that has been modulated according to the combination of BSK using two bands and PAM. Here, the determiner 930 determines a central frequency having large energy first. When the energy exceeds a second reference value, the determiner 930 determines that the received UWB signal has a large amplitude. When the energy exceeds the first reference value but is less than the second reference value, the determiner 930 determines that the received UWB signal has a small amplitude.

Also, the determiner 930 can demodulate a UWB signal that has been modulated according to a combined method including PPM by further determining a position of the energy on the time axis.

Figures 10A and 10B are graphs showing an input UWB signal and a waveform of a band-pass filtered UWB signal in the UWB receiver 900 shown in Figure 9, respectively.

Referring to Figure 10A, the input UWB signal of the RF signal receiver 910 has a waveform similar to a noise waveform. Referring to Figure 10B, the band-pass filtered UWB signal has peaks at particular central frequencies.

Figure 11 is a block diagram of a UWB receiver according to another embodiment of the present invention.

The UWB receiver 1100 includes an RF signal receiver 1110 for receiving a UWB signal r(t), a correlator 1120 provides correlations between the received UWB signal and a plurality of central frequencies, and a determiner 1130 for comparing the correlations, determining the most correlation, and determining data segment mapped to central frequency having the most correlation among the plurality of central frequencies.

To receive a spread spectrum UWB signal from a UWB transmitter, the UWB receiver 1100 further includes a spectrum despreader 1140 for despreading a bitstream comprised of data segments.

The correlator 1120 provides correlations between the received UWB signal and two distinct central frequencies f1 and f2. For this operation, the correlator 1120 includes a first UWB signal template generator 1123 for generating a UWB signal template of a first frequency f1, a second UWB signal template generator 1124 for generating a UWB signal template of a second frequency f2, a first mixer 1121, a second mixer 1122, a first integrator 1125, and a second integrator 1126. The UWB signal templates are mixed with the received UWB signal by the first and second mixers 1121 and 1122, respectively. When a UWB signal and a UWB signal template that are in different frequency bands are mixed, correlation is low. However, when a UWB signal and a UWB signal template that are in the same frequency band are mixed, correlation is high.

According to an embodiment of the invention, when the UWB signal modulated using BSK is transmitted in a wireless manner, the RF signal receiver 1110 receives this signal. The first mixer 1121 mixes the UWB signal with a UWB signal template having a central frequency of the first frequency f1. The second mixer 1122 mixes the UWB signal with a UWB signal template having a central frequency of the second frequency f2. A first mixed UWB signal from the first mixer 1121 and a second mixed UWB signal from the second mixer 1122 are transmitted to the first integrator 1125 and the second integrator 1126, respectively, to be integrated. For example, the first integrator 1125 may integrate the first mixed UWB signal over a frequency band corresponding to the bandwidth of the UWB signal and centered at the first frequency f1. For this operation, the first integrator 1125 band-pass filters the first mixed UWB signal with the central frequency f1, and integrates this filtered first mixed UWB signal over the bandwidth of the UWB signal. The second integrator 1126 integrates the second mixed UWB signal in the same manner.

The determiner 1130 compares a value output from the first integrator 1125 and a value output from the second integrator 1126 and determines the central frequency of the UWB signal by choosing the frequency corresponding to the larger value. The determiner 1130 outputs a data segment mapped to this central frequency.

When a UWB signal modulated using a combination of BSK and other modulation methods is transmitted in a wireless manner, the UWB receiver 1100 operates in the same manner as the UWB receiver 900 shown in Figure 9. In other words, the amplitude of the UWB signal may be determined by a value output from the integrator 1125 or 1126. The position of the UWB signal on the time axis may be determined by the time when the UWB signal is detected. However, when a UWB signal is received that has been modulated using a combination of BSK and BPM, the UWB receiver 1100 may generate UWB signal templates having different phases in correspondence to the signals generated by the UWB signal generator 120 shown in Figure 3.

Figures 12A and 12B are graphs showing an input UWB signal and a waveform of the UWB signal after passing through a mixer of the UWB receiver 1100 shown in Figure 11.

Referring to Figure 12A, a UWB signal input to the RF signal receiver 1110 has a waveform similar to a noise waveform. Referring to Figure 12B, the mixed UWB signal has peaks at particular central frequencies.

Figures 13A and 13B are graphs illustrating relationships between frequency bands and central frequencies in an embodiment of the present invention.

In the above-described embodiments, BSK using two bands is utilized. However, BSK using four frequency bands as shown in Figure 13A, or BSK using eight frequency bands as shown in Figure 13B may also be utilized for UWB communication. Further, the frequency band may be divided into more than eight bands. The frequency band may be divided into numbers satisfying the FCC provision that the bandwidth exceed 500 MHz.

In the above description, the number of frequency bands is the same as the number of central frequencies. However, they may differ in other embodiments of the present invention.

Figure 14A illustrates modulation using two frequency bands and four central frequencies. Figure 14B illustrates modulation using two frequency bands and eight central frequencies. In other words, a modulation method using a plurality of central frequencies in a single frequency band is possible. In the modulation illustrated in Figure 14A, four symbols can be obtained. And in the modulation illustrated in Figure 14B, eight symbols can be obtained. The modulation illustrated in Figures 14A and 14B is different from that illustrated in Figures 13A and 13B in that a UWB signal corresponding to each symbol has a wider frequency band. When the UWB signal has a wider frequency band, the same information can be transmitted with a temporally shorter pulse. Accordingly, when the modulation illustrated in Figures 14A and 14B is used, a signal can be transmitted with greater energy during a shorter time period than in the modulation illustrated in Figures 13A and 13B, and therefore, the effect of noise can be reduced. Therefore, more data can be transmitted by using the modulation illustrated in Figures 14A and 14B during the same time period by using the modulation illustrated in Figures 13A and 13B.

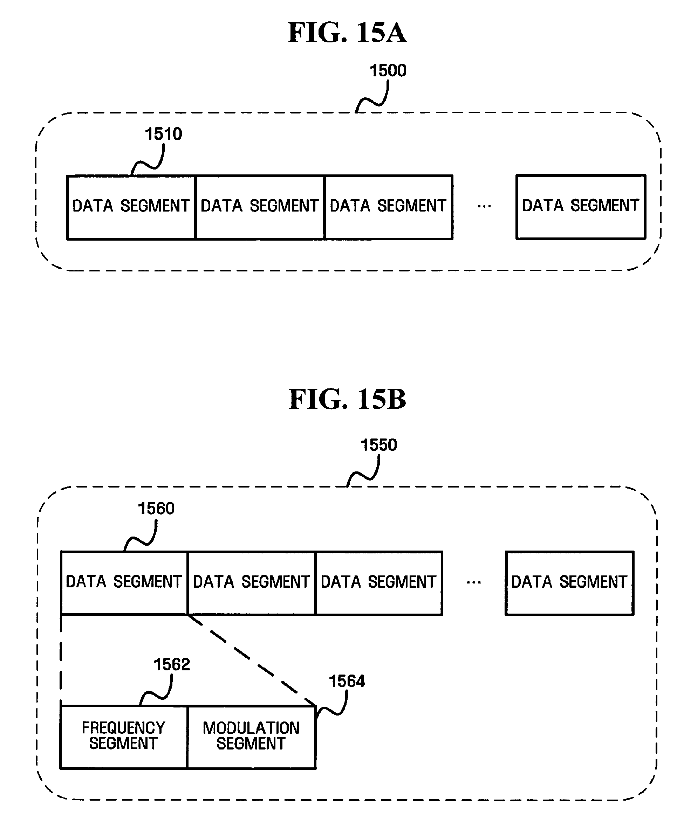

Figures 15A and 15B illustrate the structures of a bitstream according to different embodiments of the present invention.

When BSK (or a method involving changing a central frequency) is used, a bitstream 1500 may be comprised of data segments 1510 each composed of one bit or a plurality of bits mapped to a symbol. For example, when BSK using two bands is utilized, each data segment 1510 is composed of one bit. When BSK using four bands is used, each data segment 1510 is composed of two bits.

When a combination of BSK and at least one other modulation method is used, a bitstream 1550 may be comprised of data segments 1560 each composed of one bit or a plurality of bits mapped to a symbol. Each data segment 1560 includes a frequency segment 1562 and a modulation segment 1564. The frequency segment 1562 is a value mapped to the central frequency of a UWB signal. The modulation segment 1564 is a value determined according to the modulation method. For example, when a UWB signal having two frequency bands is modulated using BPM, the frequency segment 1562 and the modulation segment 1564 are each composed of one bit. When a UWB signal having four frequency bands is modulated using BPM, the frequency segment 1562 and the modulation segment 1564 are composed of two bits and one bit, respectively. When a UWB signal having two frequency bands and four central frequencies is modulated using BPM, the frequency segment 1562 and the modulation segment 1564 are composed of two bits and one bit, respectively. Here, the number of bits of the frequency segment 1562 is determined according to the number of central frequencies.

As described above, the method and apparatus according to the present invention enable UWB communication using new modulation methods. Unlike existing UWB methods, a channel (a band or a central frequency) over which a UWB signal is transmitted is used to transmit information, thereby increasing data transmission efficiency.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for ultra wideband (UWB) communication, comprising:

   generating a UWB signal having different central frequencies to which data segments are mapped according to type of the data segment composed of at least one bit;

   transmitting the UWB signal in a wireless manner to a device;

   receiving, by the device, the UWB signal; and

   determining a data segment mapped to a central frequency of the received UWB signal.

2. The method of claim 1, wherein two types of the data segments are present, and the central frequency of the received UWB signal is one of two distinct frequencies.

3. The method of claim 1, wherein the determining of the data segment comprises using a non-coherent scheme to find a central frequency that is most correlated with the received UWB signal, and determining the data segment mapped to the found central frequency.

4. The method of claim 3, wherein the determining of the data segment comprises:

   band-pass filtering the received UWB signal using a plurality of band-pass filters having different central frequencies;

   obtaining strengths of band-pass filtered UWB signals having the different central frequencies;

   comparing the strengths of the band-pass filtered UWB signals; and

   determining a bit segment mapped to the central frequency of the strongest band-pass filtered UWB signal.

5. The method of claim 4, wherein the obtaining of the strengths of the band-pass filtered UWB signals comprises integrating the power of each band-pass filtered UWB signal over a predetermined time period.

6. The method of claim 1, wherein the determining of the data segment comprises using a coherent scheme to find a central frequency that is most correlated with the received UWB signal and determining the data segment mapped to this central frequency.

7. The method of claim 6, wherein the determining of the data segment comprises:

   mixing the received UWB signal with UWB signal templates respectively having different frequencies;

   integrating the mixed UWB signal; and

determining a bit segment mapped to a frequency having the highest correlation among the different frequencies.

**8.** The method of claim 1, wherein the data segments comprise spectrum-spread digital data.

**9.** A method for ultra wideband (UWB) communication, comprising:

determining a central frequency to which frequency segments are mapped according to type of the frequency segment included in a data segment composed of a plurality of bits;

performing predetermined modulation according to a type of a modulation segment included in the data segment in order to generate a UWB signal having the determined central frequency;

transmitting the UWB signal in a wireless manner to a device;

receiving, by the device, the UWB signal; and

determining a frequency segment mapped to a central frequency of the received UWB signal and determining a modulation segment by demodulating the received UWB signal using a predetermined demodulation method.

**10.** The method of claim 9, wherein two types of frequency segments are present, and the central frequency of the received UWB signal is one of two different frequencies.

**11.** The method of claim 9, wherein a band of the received UWB signal overlaps with a band of a UWB signal having an adjacent central frequency.

**12.** The method of claim 9, wherein the predetermined modulation and demodulation methods are biphase modulation (BPM).

**13.** The method of claim 9, wherein the predetermined modulation and demodulation methods are pulse amplitude modulation (PAM).

**14.** The method of claim 9, wherein data comprising the data segments is spectrum-spread digital data.

**15.** An ultra wideband (UWB) transmitter comprising:

a UWB signal generator (120) that generates UWB signals having different central frequencies;

a selector (130) that selects one UWB signal mapped to a data segment composed of at least one bit among the generated UWB signals; and

a transmitter (140) that outputs the selected UWB in a wireless manner.

**16.** The UWB transmitter of claim 15, wherein the UWB signal generator (120) comprises:

a plurality of oscillators (231, 232) that generate carrier waves having different frequencies;

a pulse generator (210) that generates a pulse having a predetermined bandwidth; and

a mixer (221, 222) that mixes the generated pulse with each of the carrier waves respectively having the different frequencies.

**17.** The UWB transmitter of claim 16, wherein the pulse generator (210) generates two types of pulses having different phases.

**18.** The UWB transmitter of claim 16, wherein the pulse generator (210) generates two types of pulses having different amplitudes.

**19.** The UWB transmitter of claim 16, wherein the oscillators (231, 232) generate carrier waves having two distinct frequencies.

**20.** The UWB transmitter of claim 16, wherein a spacing between the frequencies of the carrier waves generated by the oscillators (231, 232) is narrower than the bandwidth of the pulse.

**21.** An ultra wideband (UWB) receiver comprising:

a receiver (910) that receives a UWB signal transmitted in a wireless manner;

a correlator (920) that provides correlations between the received UWB signal and a plurality of central frequencies; and

a determiner (930) that determines data segment mapped to central frequency having the most correlation among the plurality of central frequencies.

**22.** The UWB receiver of claim 21, wherein the correlator (920) determines correlations between the received UWB signal and the plurality of central frequencies using a non-coherent scheme.

**23.** The UWB receiver of claim 22, wherein the correlator (920) comprises:

a band filter (921, 922) that band-pass filters the received UWB signal using a plurality of band-pass filters having different central frequencies; and

an energy detector (926, 927) that detects energy of band-pass filtered UWB signals.

**24.** The UWB receiver of claim 23, wherein the energy of the band-pass filtered UWB signals is obtained by integrating the power of each band-pass filtered UWB signal over a predetermined time period.

**25.** The UWB receiver of claim 21, wherein the correlator (920) determines correlations between the received UWB signal and the plurality of central frequencies using a coherent scheme.

**26.** The UWB receiver of claim 25, wherein the correlator (920) comprises:

a template generator (1123, 1124) that generates UWB signal templates of different frequencies;

a mixer (1121, 1122) for mixing the UWB signal templates with the received UWB signal; and

an integrator (1125, 1126) that integrates each mixed UWB signal.

**27.** The UWB receiver of claim 21, wherein a spacing between the plurality of central frequencies is narrower than the bandwidth of the received UWB signal.

**28.** The UWB receiver of claim 21, wherein the correlator (920) determines correlations between the received UWB signal and two distinct central frequencies.

**29.** A recording medium having a computer readable program recorded therein that executes the method of claim 1.

**30.** A recording medium having a computer readable program recorded therein that executes the method of claim 9.

FIG. 1

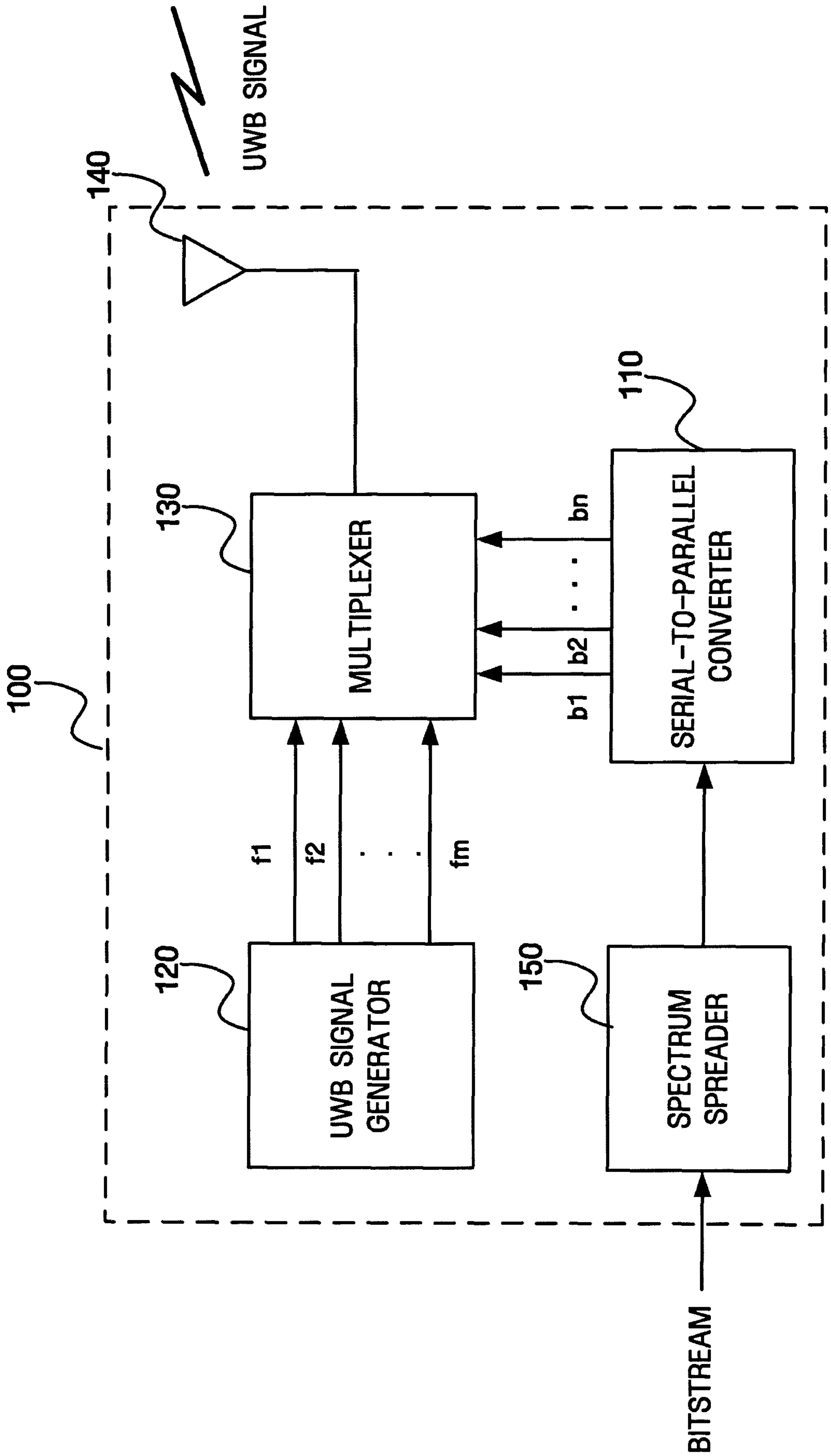
UWB SIGNAL
140
100
130
MULTIPLEXER
110
SERIAL-TO-PARALLEL CONVERTER
b1
b2
bn
120
UWB SIGNAL GENERATOR
f1
f2
fm
150
SPECTRUM SPREADER
BITSTREAM

FIG. 2

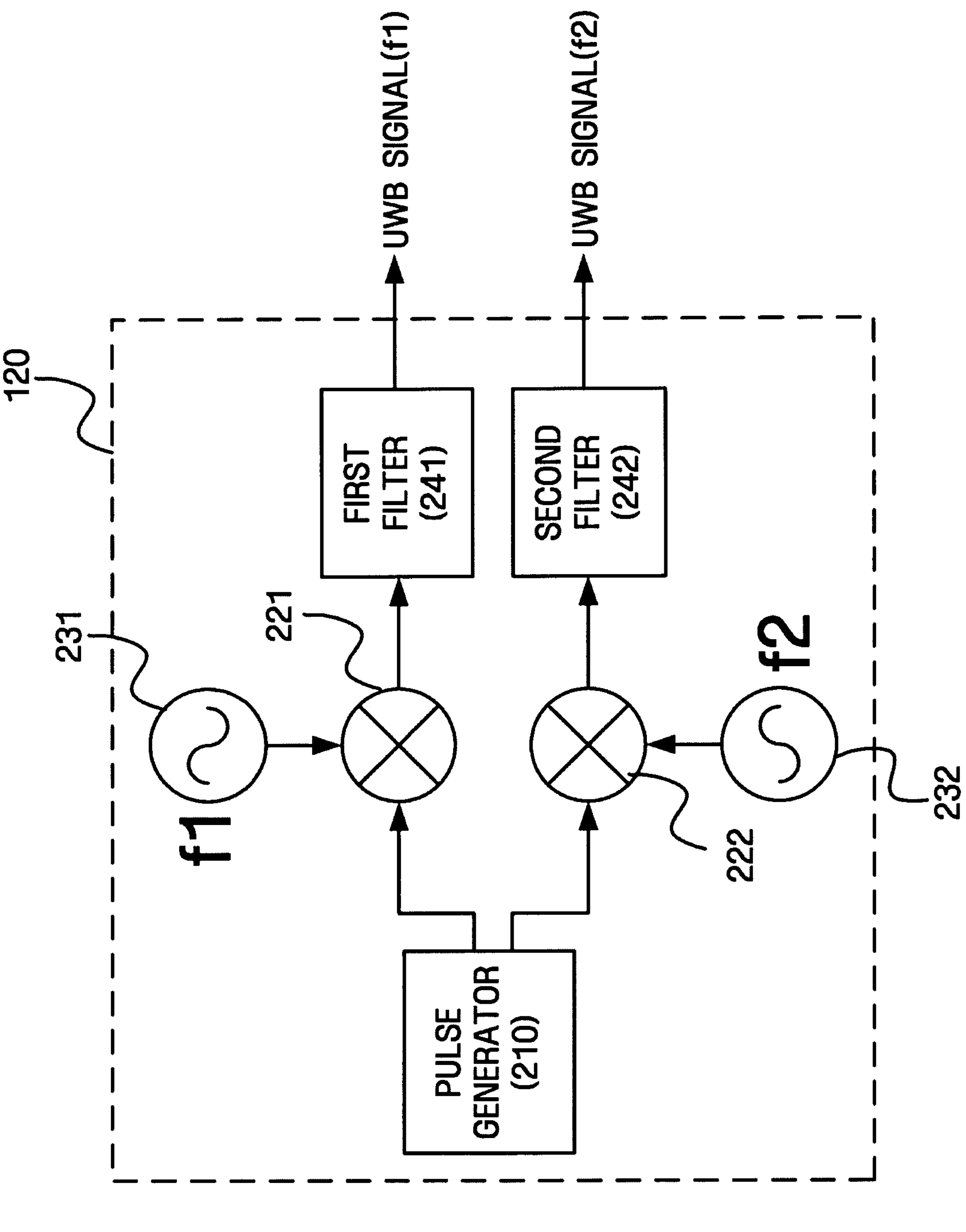

120
231
f1
221
FIRST FILTER (241)
SECOND FILTER (242)
UWB SIGNAL(f1)
UWB SIGNAL(f2)
f2
222
232
PULSE GENERATOR (210)

FIG. 3

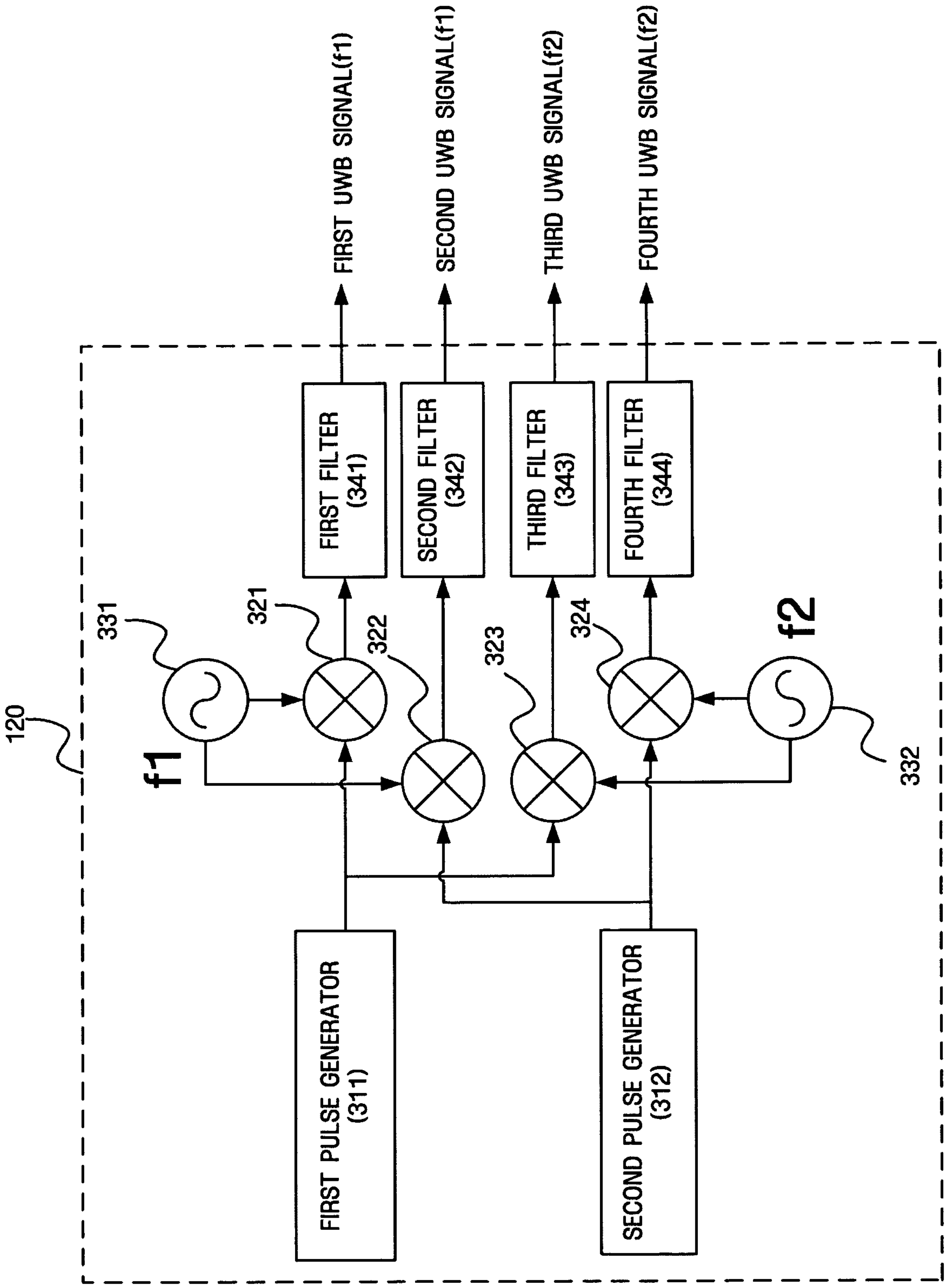
120
331
f1
321
322
323
324
f2
332
FIRST PULSE GENERATOR (311)
SECOND PULSE GENERATOR (312)
FIRST FILTER (341)
SECOND FILTER (342)
THIRD FILTER (343)
FOURTH FILTER (344)
FIRST UWB SIGNAL(f1)
SECOND UWB SIGNAL(f1)
THIRD UWB SIGNAL(f2)
FOURTH UWB SIGNAL(f2)

# FIG. 4A

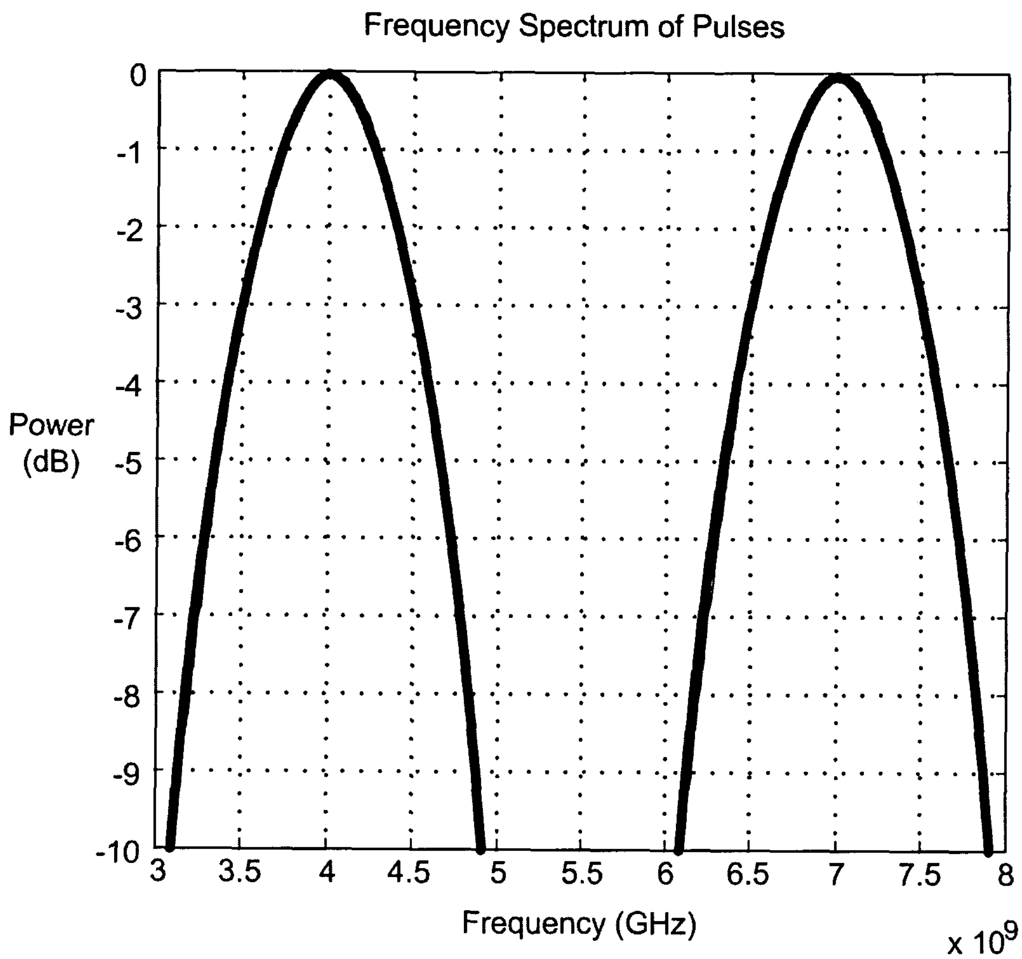


FREQUENCY BANDS

# FIG. 4B

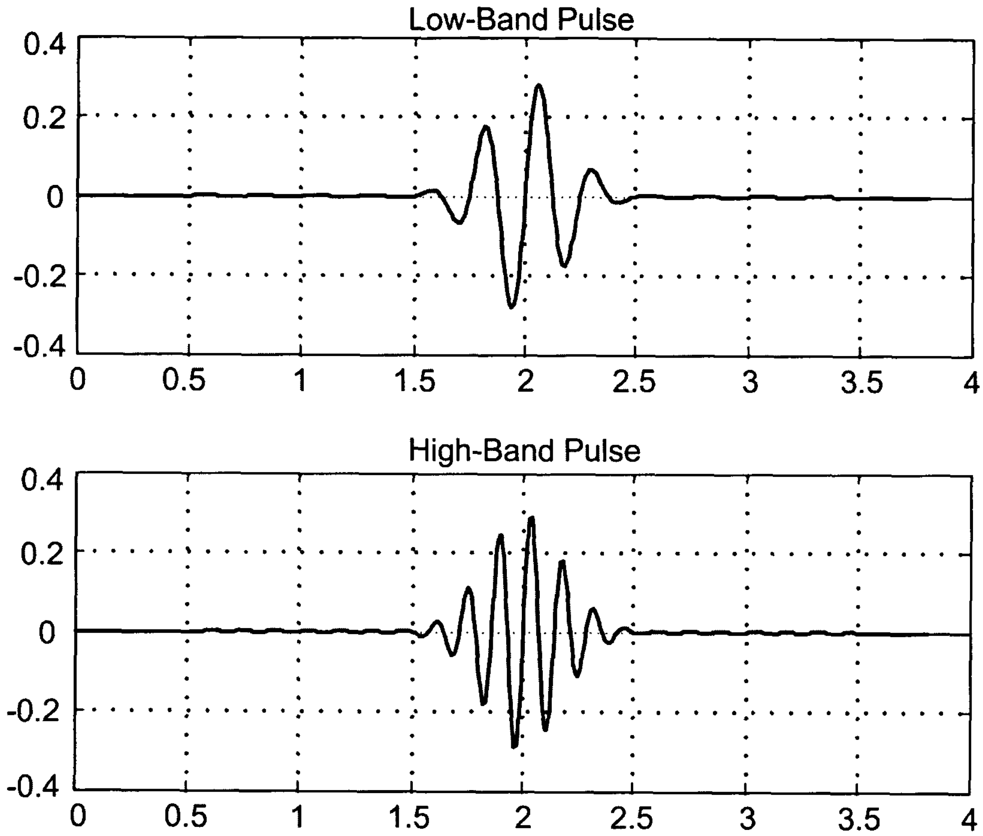


WAVEFORMS OF UWB SIGNAL IN DIFFERENT BANDS

# FIG. 5

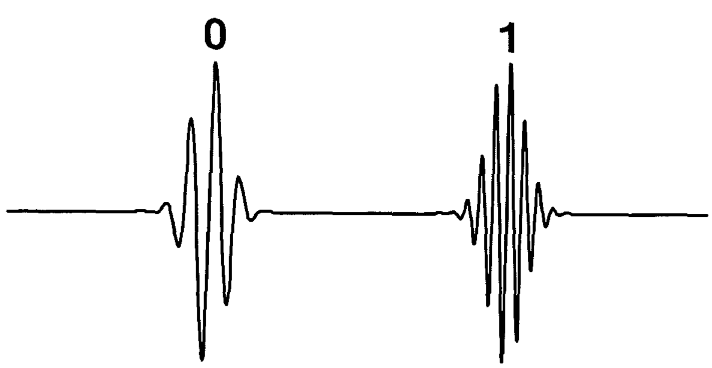


BSK

FIG. 6

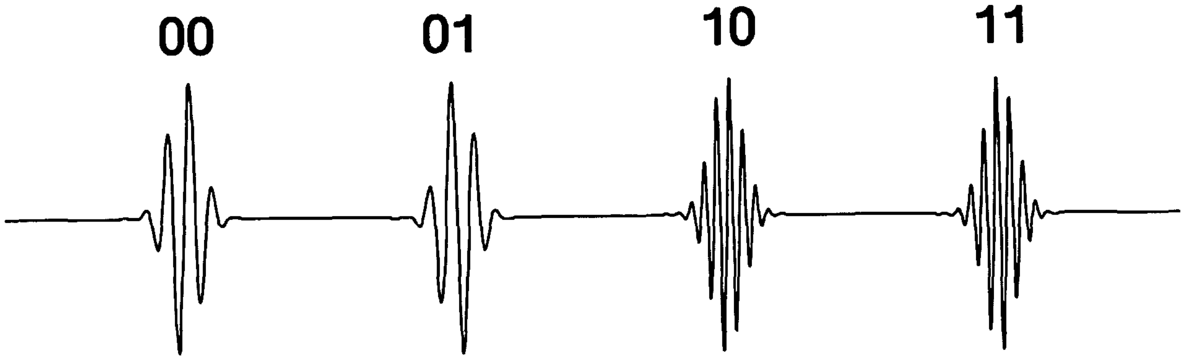


BSK+BPM

FIG. 7

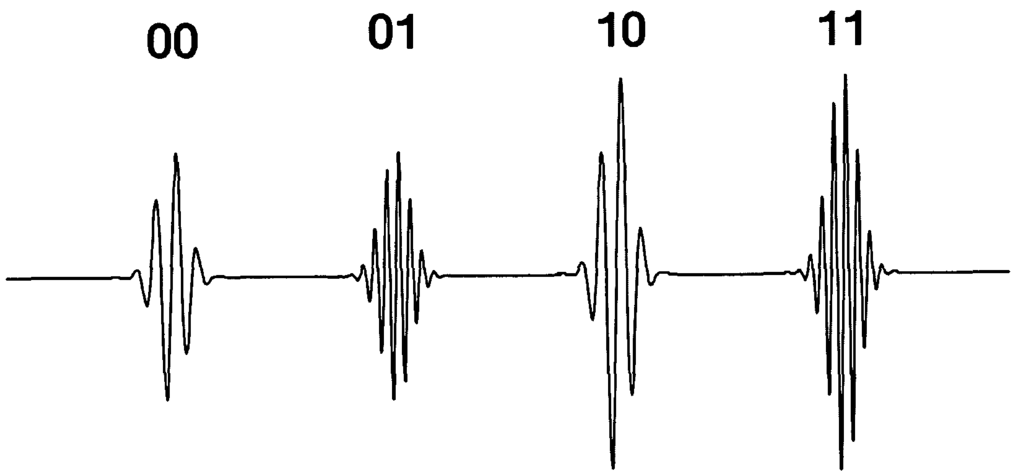


BSK+PAM

FIG. 8

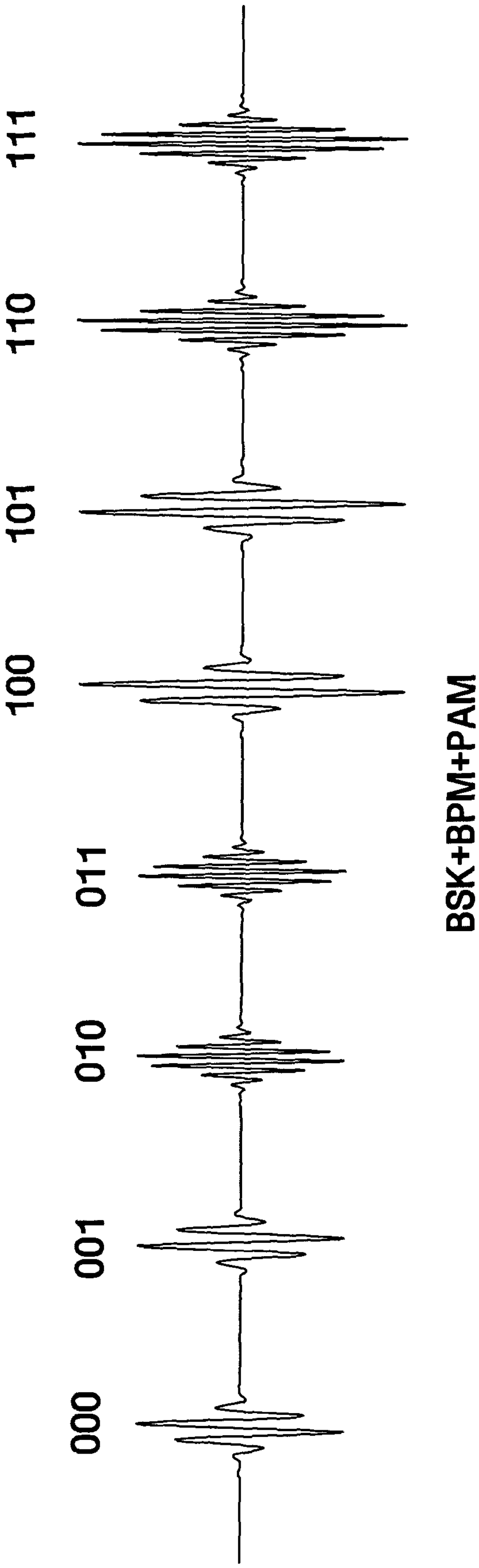

FIG. 9

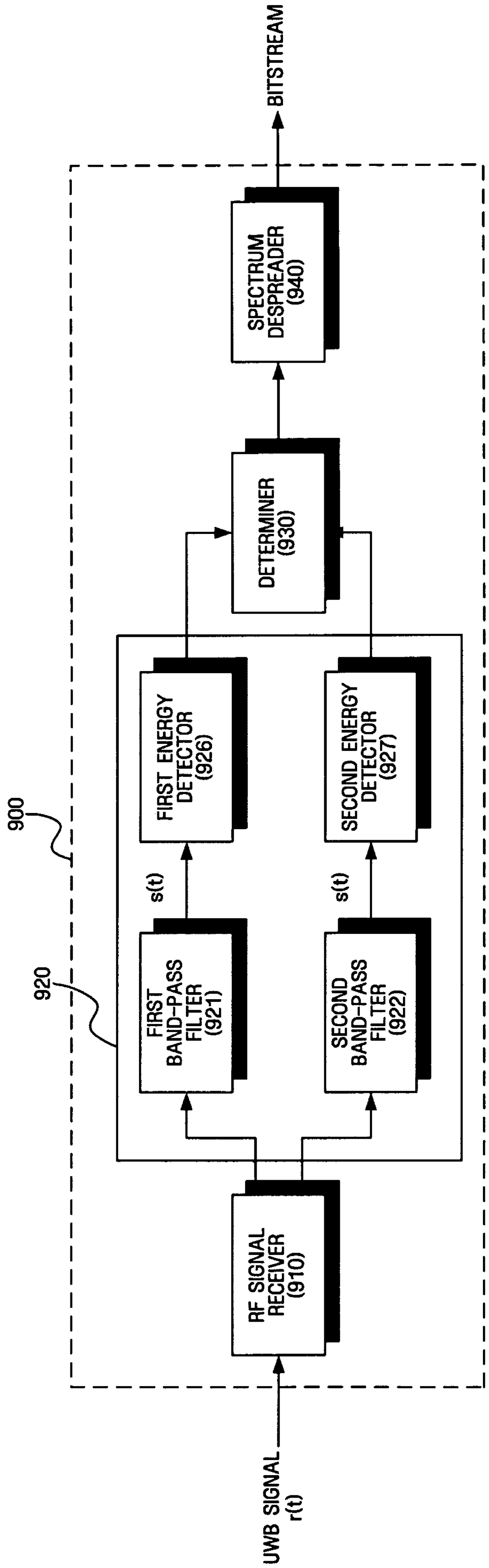
900
920
UWB SIGNAL r(t)
RF SIGNAL RECEIVER (910)
FIRST BAND-PASS FILTER (921)
SECOND BAND-PASS FILTER (922)
s(t)
s(t)
FIRST ENERGY DETECTOR (926)
SECOND ENERGY DETECTOR (927)
DETERMINER (930)
SPECTRUM DESPREADER (940)
BITSTREAM

# FIG. 10A

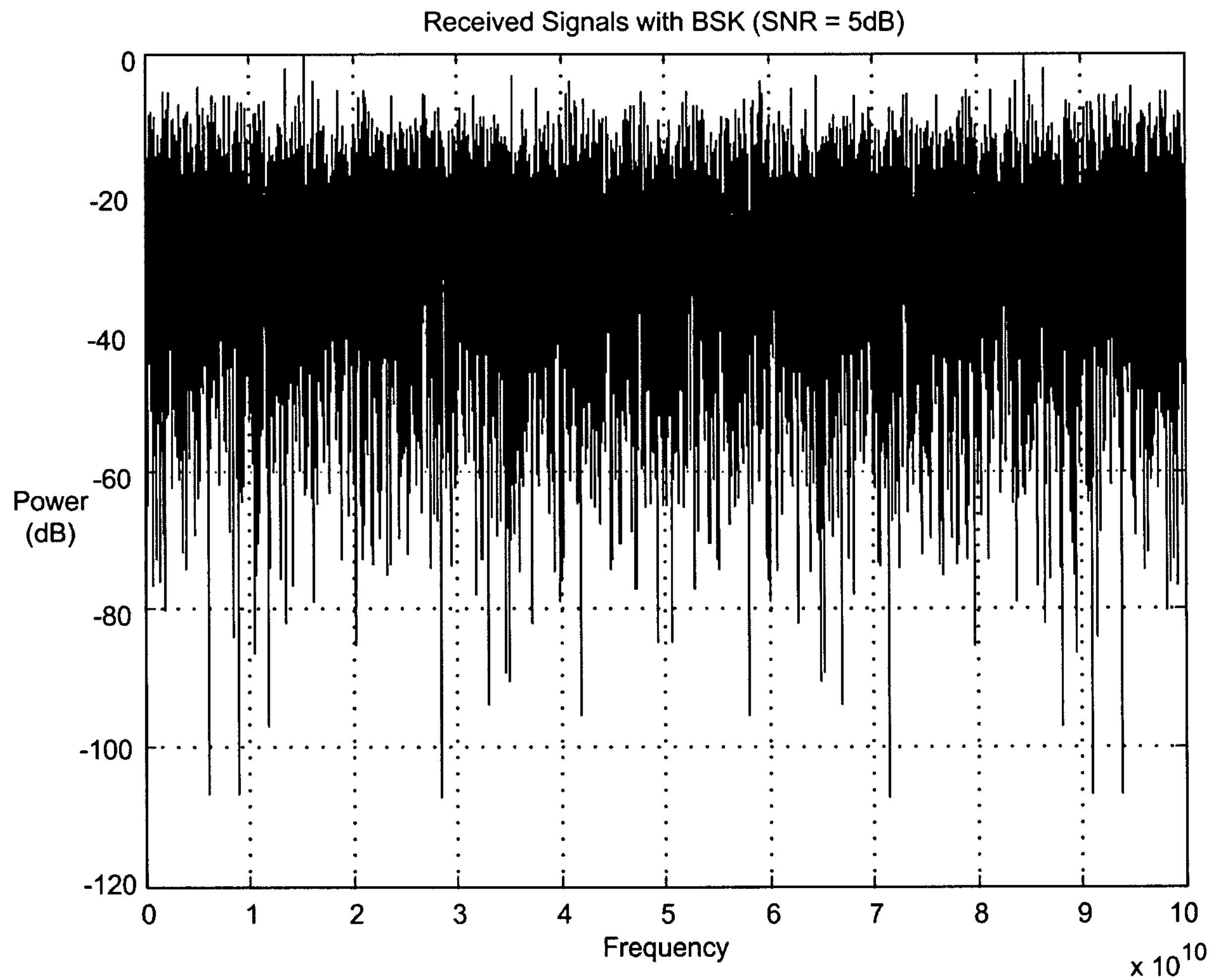


WAVEFORM OF INPUT UWB SIGNAL (r(t))

# FIG. 10B

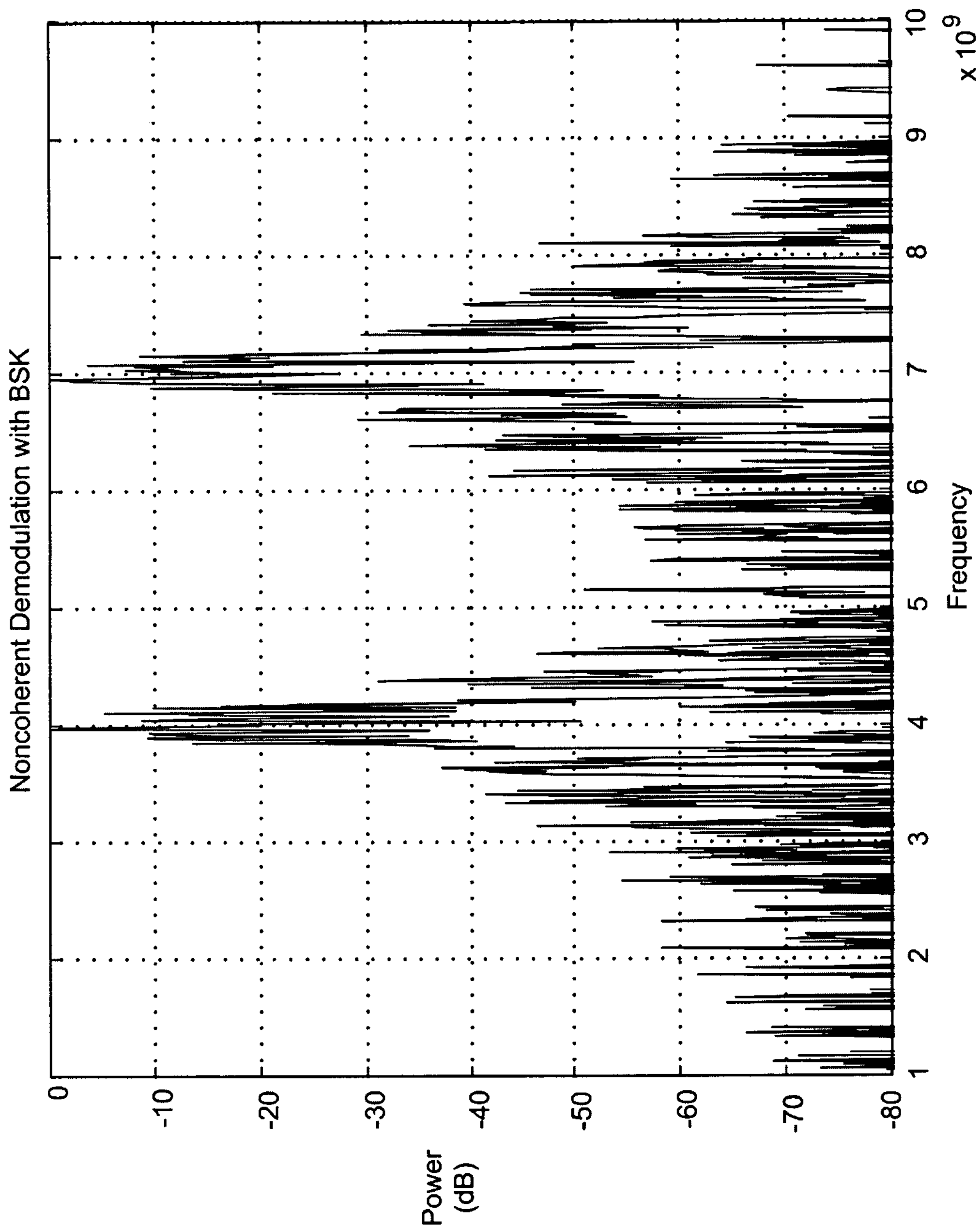


WAVEFORM OF BAND-PASS FILTERED UWB SIGNAL (s(t))

FIG. 11

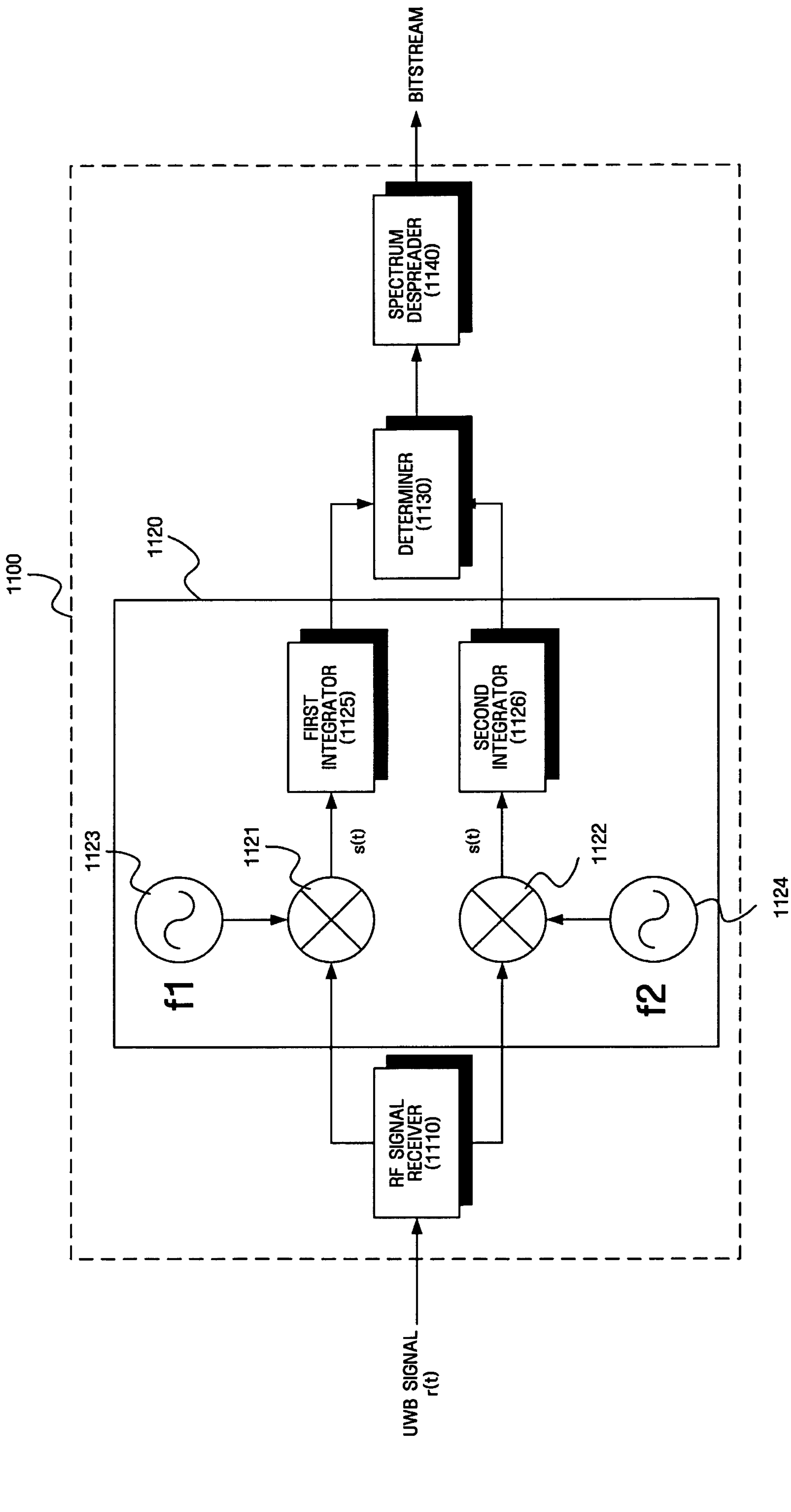
UWB SIGNAL
r(t)
RF SIGNAL RECEIVER (1110)
f1
f2
1123
1121
1122
1124
s(t)
s(t)
FIRST INTEGRATOR (1125)
SECOND INTEGRATOR (1126)
1120
1100
DETERMINER (1130)
SPECTRUM DESPREADER (1140)
BITSTREAM

# FIG. 12A

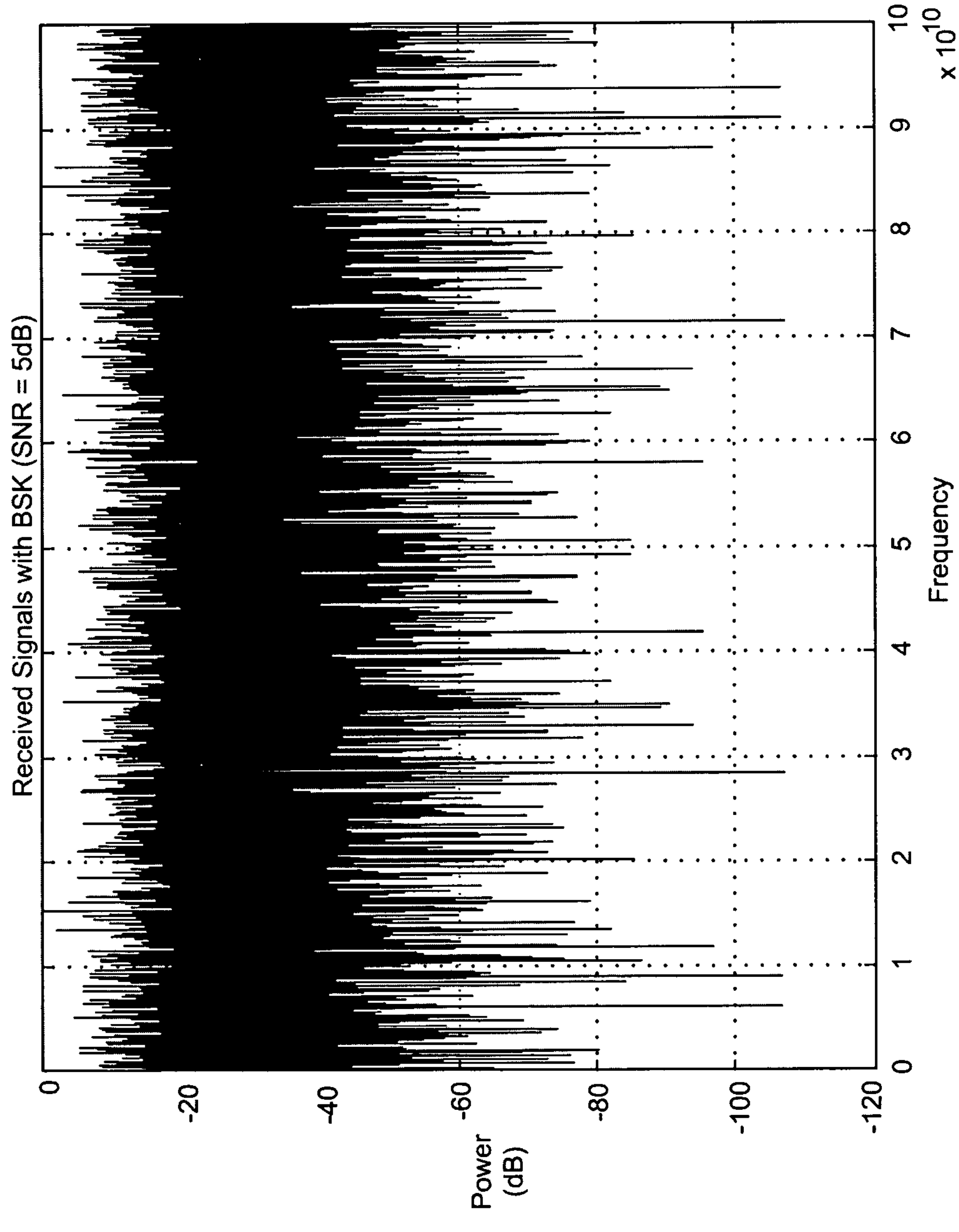


WAVEFORM OF INPUT UWB SIGNAL (r(t))

FIG. 12B

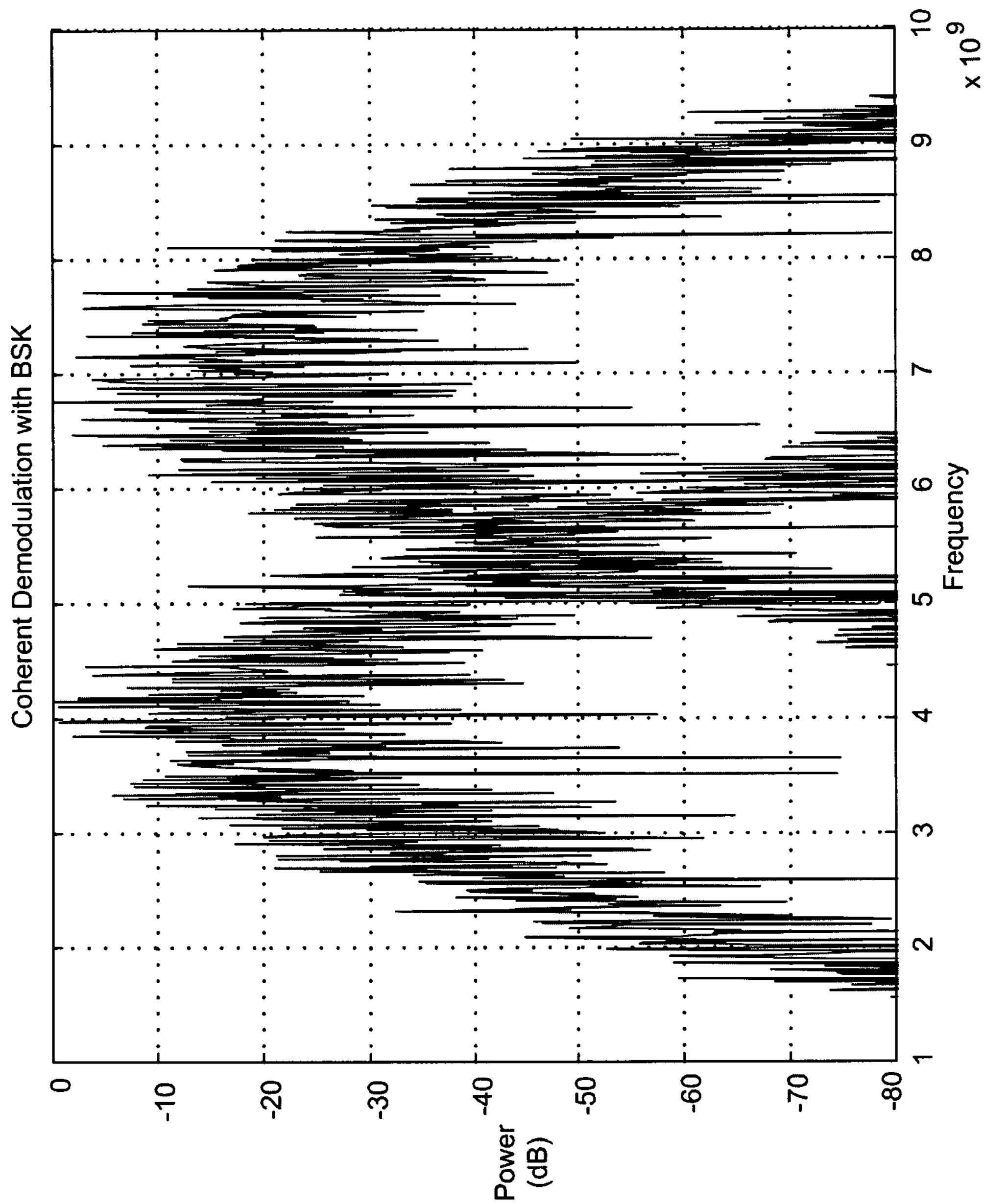


WAVEFORM OF MIXED UWB SIGNAL (s(t))

## FIG. 13A

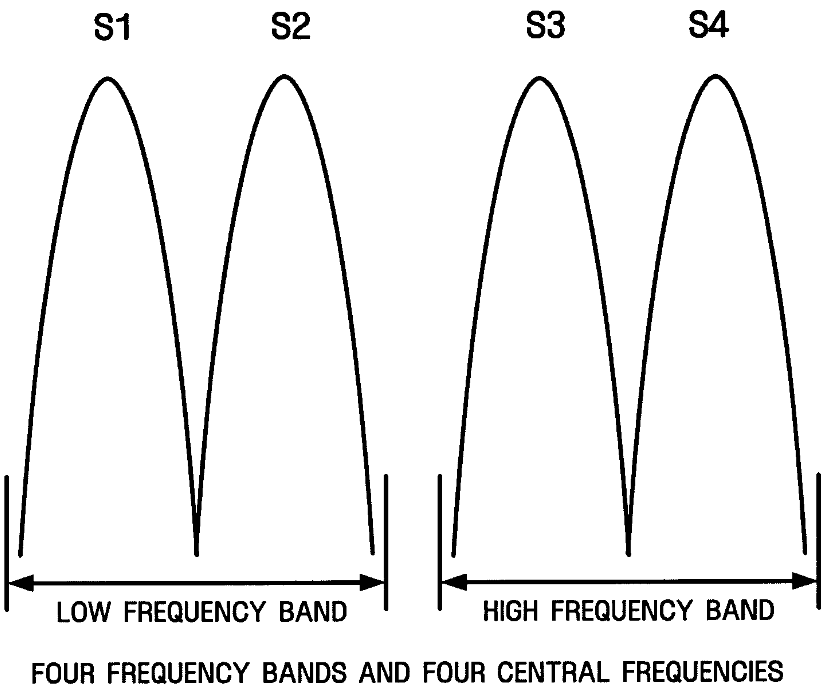


## FIG. 13B

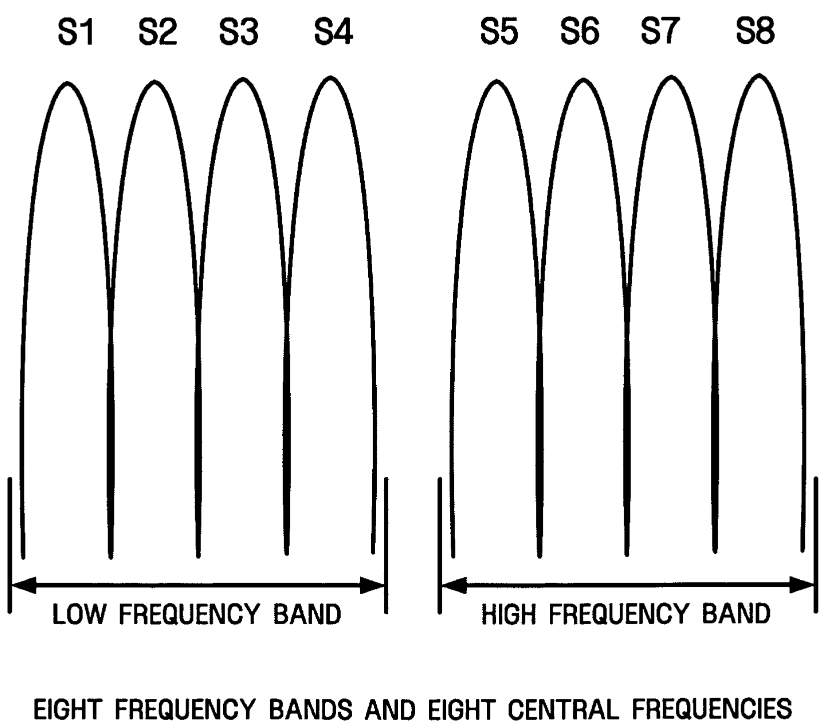

# FIG. 14A

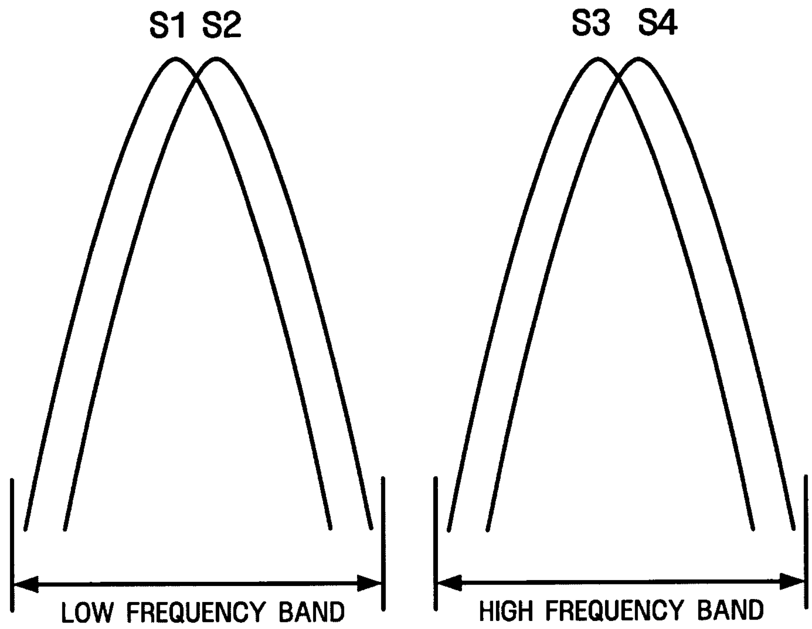


TWO FREQUENCY BANDS AND FOUR CENTRAL FREQUENCIES

# FIG. 14B

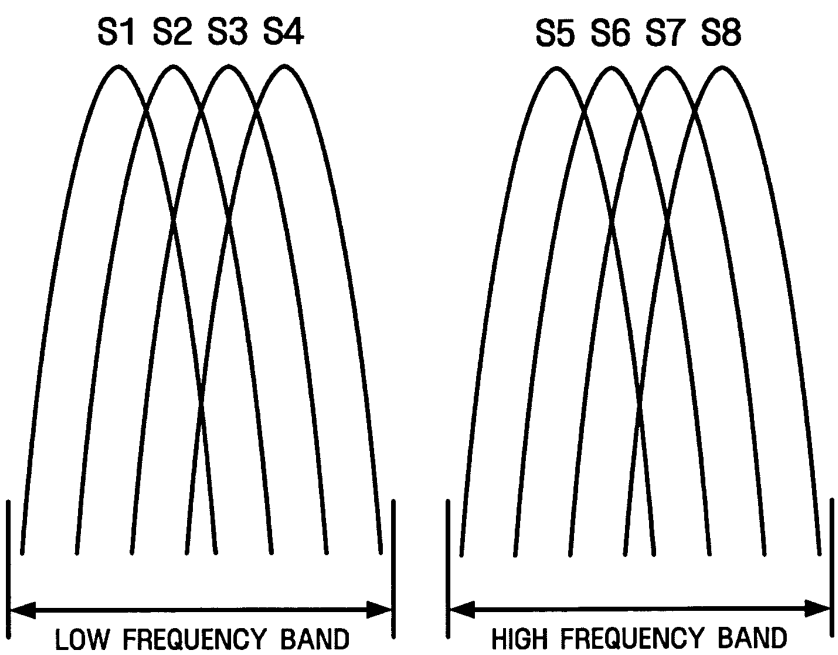


TWO FREQUENCY BANDS AND EIGHT CENTRAL FREQUENCIES

FIG. 15A

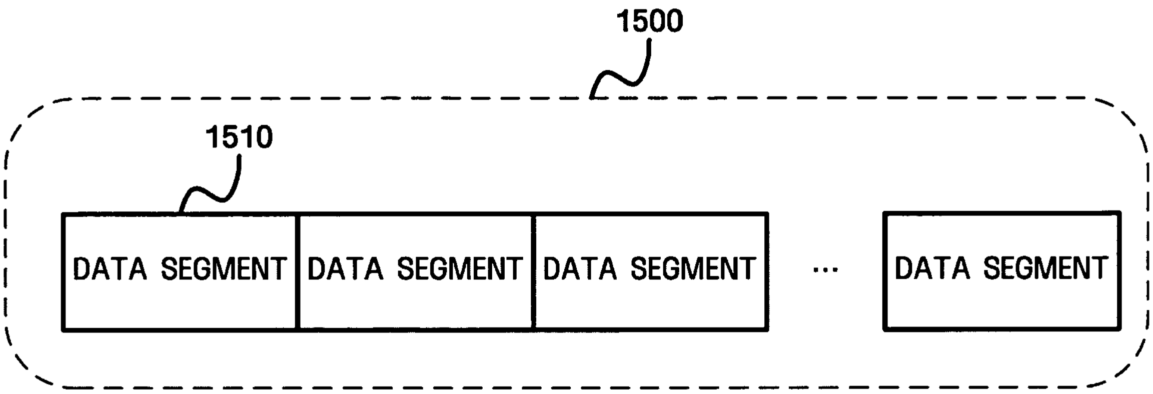


FIG. 15B